# FASCICULE DE BREVET EUROPEEN

(11) **EP 2 585 721 B1**
(45) Date de publication et mention de la délivrance du brevet: **05.10.2016**
(21) Numéro de dépôt: 11738012.1
(22) Date de dépôt: 23.06.2011
(51) Int. Cl.: F04D 29/32, F01D 5/14, F01D 5/28, F04D 29/02, B21K 3/04

(54) **PROCEDE DE REALISATION D'UN RENFORT METALLIQUE D'AUBE DE TURBOMACHINE**
VERFAHREN ZUR FERTIGUNG DES METALLISCHEN SCHUTZSCHILDES EINER TURBOMASCHINENSCHAUFEL
PROCESS OF MANUFACTURING THE METALLIC SHIELD OF A TURBOMACHINE BLADE

(30) Priorité: 24.06.2010 FR 1055066
(43) Date de publication de la demande: 01.05.2013
(73) Titulaire: Snecma, 75015 Paris (FR)
(72) Inventeur: HOTTIER, Christine, F-77550 Moissy-Cramayel Cedex (FR); LAMAISON, Bertrand, F-77550 Moissy-Cramayel Cedex (FR); ABOUSEFIAN, Jacques, F-77550 Moissy-Cramayel Cedex (FR)
(74) Mandataire: Camus, Olivier Jean-Claude
(86) Numéro de dépôt international: PCT/FR2011/051454
(87) Numéro de publication internationale: WO 2011/161385

(56) Documents cités:
- EP-A1- 1 574 270
- EP-A1- 1 719 699
- WO-A1-94/23890
- DE-A1- 19 803 589
- US-A- 2 941 603
- US-A1- 2009 165 299

## Description

La présente invention concerne un procédé de réalisation d'un renfort métallique d'aube composite ou métallique de turbomachine.

Plus particulièrement l'invention concerne un procédé de réalisation d'un renfort métallique de bord d'attaque d'aube de turbomachine.

Le domaine de l'invention est celui des turbomachines et plus particulièrement celui des aubes de soufflante, en matériau composite ou métallique, de turbomachine et dont le bord d'attaque comporte un renfort structurel métallique.

Toutefois, l'invention est également applicable pour la réalisation d'un renfort métallique destiné à renforcer un bord d'attaque ou un bord de fuite d'aube de tout type de turbomachine, terrestre ou aéronautique, et notamment un turbomoteur d'hélicoptère ou un turboréacteur d'avion.

On rappelle que le bord d'attaque correspond à la partie antérieure d'un profil aérodynamique qui fait face au flux d'air et qui divise l'écoulement d'air en un écoulement d'air d'intrados et en un écoulement d'air extrados. Le bord de fuite correspond à la partie postérieure d'un profil aérodynamique où se rejoignent les écoulements intrados et extrados.

Les aubes de turbomachine, et notamment les aubes de soufflante, subissent d'importantes contraintes mécaniques, liées notamment à la vitesse de rotation, et doivent satisfaire à des conditions strictes de poids et d'encombrement. L'une des options envisagées pour alléger les aubes est l'utilisation de matériaux composites pour leur fabrication.

Il est connu d'équiper les aubes de soufflante d'une turbomachine, réalisées en matériaux composites, d'un renfort structurel métallique s'étendant sur toute la hauteur de l'aube et au-delà de leur bord d'attaque comme mentionné dans le document EP1908919 déposé par SNECMA. Un tel renfort permet de protéger l'aubage composite lors d'un impact d'un corps étranger sur la soufflante, tel que par exemple un oiseau, de la grêle ou encore des cailloux.

En particulier, le renfort structurel métallique protège le bord d'attaque de l'aube composite en évitant des risques de délamination, de rupture de fibre ou encore d'endommagement par décohésion fibre/matrice.

De façon classique, une aube de turbomachine comporte une surface aérodynamique s'étendant, selon une première direction, entre un bord d'attaque et un bord de fuite et, selon une deuxième direction sensiblement perpendiculaire à la première direction, entre un pied et un sommet de l'aube. Le renfort structurel métallique épouse la forme du bord d'attaque de la surface aérodynamique de l'aube et s'étend selon la première direction au-delà du bord d'attaque de la surface aérodynamique de l'aube pour épouser le profil de l'intrados et de l'extrados de l'aube et selon la deuxième direction entre le pied et le sommet de l'aube.

De façon connue, le renfort structurel métallique est une pièce métallique en titane réalisée entièrement par fraisage à partir d'un bloc de matière.

Il est également connu de réaliser le renfort par matriçage d'un barreau métallique, voir par exemple le document EP 1 719 699 A1.

Cependant, le renfort métallique d'un bord d'attaque d'aube est une pièce complexe à réaliser, nécessitant de nombreuses opérations de reprises et des outillages complexes impliquant des coûts de réalisation importants.

Dans ce contexte, l'invention vise à résoudre les problèmes mentionnés ci-dessus, en proposant un procédé de réalisation d'un renfort métallique de bord d'attaque ou de bord de fuite d'aube de turbomachine permettant de réduire significativement les coûts de réalisation d'une telle pièce et de simplifier la gamme de fabrication.

A cette fin, l'invention propose un procédé de réalisation d'un renfort métallique de bord d'attaque ou de bord de fuite d'aube de turbomachine comportant :
- une étape de déformation par forgeage d'un barreau métallique , le métal étant poussé dans une direction essentiellement perpendiculaire à l'axe longitudinal du barreau au travers de deux filières de façon à obtenir une pièce intermédiaire comportant deux ailettes de part et d'autre d'une partie pleine apte à former la base dudit renfort métallique, lesdites deux ailettes présentant un angle d'ouverture α ;
- une étape de déformation desdites ailettes de ladite pièce intermédiaire, modifiant l'angle d'ouverture α, de façon à obtenir la forme finale du renfort métallique de bord d'attaque ou de bord de fuite d'aube de turbomachine.

On entend ici par étape de déformation par forgeage une opération de mise en forme des métaux par forgeage consistant à pousser un matériau ductile (rendu ductile par chauffage) à travers un trou, ou une filière. Ainsi, lors de la première étape de déformation par forgeage du barreau métallique, le métal solide chauffé est placé dans un outillage de manière à faire ressortir par poussée de la matière à travers un orifice ou une filière agencé(e) dans l'outillage par écoulement plastique.

L'étape de déformation par forgeage s'apparente à une étape de déformation par filage directe ou inverse qui consiste à placer du métal solide chauffé, à la température de filage du matériau, c'est-à-dire dans un environnement à une température au moins égale à 250 degrés Celsius, dans un outillage et de la faire ressortir par un orifice, généralement une filière en exerçant une poussée. A partir d'un certain effort, il y a un écoulement plastique du métal à travers la filière.

Le procédé de déformation par forgeage selon l'invention est donc différent d'un procédé de matriçage qui consiste à déformer de la matière pour remplir une empreinte. De plus, le matriçage est un procédé de déformation qui consiste à déplacer de la matière métallique perpendiculairement au sens de frappe de l'outillage.

Grâce à l'invention, le renfort structurel métallique de forme complexe est réalisé de façon simple et rapide à partir d'un simple barreau métallique et d'une succession d'étapes de forge simples permettant ainsi de réduire sensiblement les coûts de fabrication d'une telle pièce, notamment par l'utilisation d'outillages et de machines simples.

En outre, la réalisation d'un renfort structurel métallique d'aube de turbomachine à partir d'un barreau métallique, et non à partir de tôles métallique, permet également de minimiser les chutes de matières et par conséquent les coûts de fabrication d'un tel renfort.

Ce procédé de réalisation permet ainsi de s'affranchir de la réalisation complexe du renfort par fraisage dans la masse à partir de méplats nécessitant de grands volumes de matière et par conséquent permet une diminution des quantités de matière première utilisées.

Le procédé de réalisation d'un renfort métallique d'aube de turbomachine selon l'invention peut également présenter une ou plusieurs des caractéristiques ci-dessous, considérées individuellement ou selon toutes les combinaisons techniquement possibles :
- ladite étape de déformation par forgeage dudit barreau métallique, le procédé de réalisation comporte une étape de cambrage dudit barreau métallique selon une direction perpendiculaire à l'axe longitudinal dudit barreau ;
- préalablement à ladite étape de déformation par forgeage dudit barreau métallique, le procédé de réalisation comporte une étape de bourrage dudit barreau métallique dans un outillage présentant une empreinte correspondant la forme finale de la base pleine dudit renfort métallique ;
- ladite étape de bourrage dudit barreau métallique et ladite étape de déformation par forgeage dudit barreau métallique sont réalisées dans le même outillage au moyen d'une pluralité de poinçons ;
- ladite étape de bourrage dudit barreau métallique est réalisée à chaud ;
- ladite étape de bourrage dudit barreau métallique, ladite étape de déformation par forgeage dudit barreau métallique sont réalisées de façon continue sans refroidissement de l'outillage ;
- ladite étape de cambrage dudit barreau métallique, ladite étape de déformation par forgeage dudit barreau métallique et ladite étape de déformation de ladite pièce intermédiaire sont réalisées à chaud ;
- ladite étape de cambrage dudit barreau métallique comporte :
   - une première sous-étape de cambrage dudit barreau métallique selon une première direction perpendiculaire à l'axe longitudinal dudit barreau ;
   - une deuxième sous-étape de cambrage dudit barreau métallique selon une deuxième direction perpendiculaire à ladite première direction et perpendiculaire à l'axe longitudinal dudit barreau ;
- ledit procédé comporte une étape de réalisation d'une préforme sur ledit barreau métallique de manière à faciliter le positionnement de l'outillage sur ledit barreau lors de ladite étape de déformation par forgeage ;
- ladite étape de déformation par forgeage est une étape de filage inverse ;
- ladite étape de déformation par forgeage est réalisée au moyen d'au moins un poinçon en deux opérations successives ;
- ladite étape de déformation desdites ailettes de ladite pièce intermédiaire réalise de façon simultanée le vrillage définitif de ladite pièce intermédiaire ;
- ladite étape de déformation desdites ailettes de ladite pièce intermédiaire réalise de façon simultanée :
   - la finalisation de la forme du rayon interne du renfort métallique ;
   - la formation des flancs latéraux et du renfort métallique ;
   - la finalisation du vrillage dudit renfort métallique.

D'autres caractéristiques et avantages de l'invention ressortiront plus clairement de la description qui en est donnée ci-dessous, à titre indicatif et nullement limitatif, en référence aux figures annexées, parmi lesquelles :
- la figure 1 est une vue latérale d'une aube comportant un renfort métallique de bord d'attaque obtenu au moyen du procédé de réalisation selon l'invention ;
- la figure 2 est une vue partielle en coupe de la figure 1 selon un plan de coupe AA ;
- la figure 3 est un schéma synoptique présentant les principales étapes de réalisation d'un renfort métallique de bord d'attaque d'aube de turbomachine du procédé de réalisation selon l'invention ;
- les figures 4A, 4B, 4C, 4D, 4E illustrent l'évolution structurelle du renfort métallique lors des différentes étapes du procédé de réalisation illustré à la figure 3 ;
- les figures 5A, 5B sont des vues partielles en coupe du renfort métallique de bord d'attaque d'aube de turbomachine lors de la troisième étape du procédé illustré en figure 3 :
- la figure 6 et la figure 7 sont des vues partielles en coupe du renfort métallique de bord d'attaque d'aube de turbomachine lors de la quatrième étape du procédé illustré en figure 3 ;
- la figure 8 est une vue partielle en perspective du renfort métallique de bord d'attaque d'aube de turbomachine lors de la cinquième étape du procédé illustré en figure 3.

Dans toutes les figures, les éléments communs portent les mêmes numéros de référence sauf précision contraire.

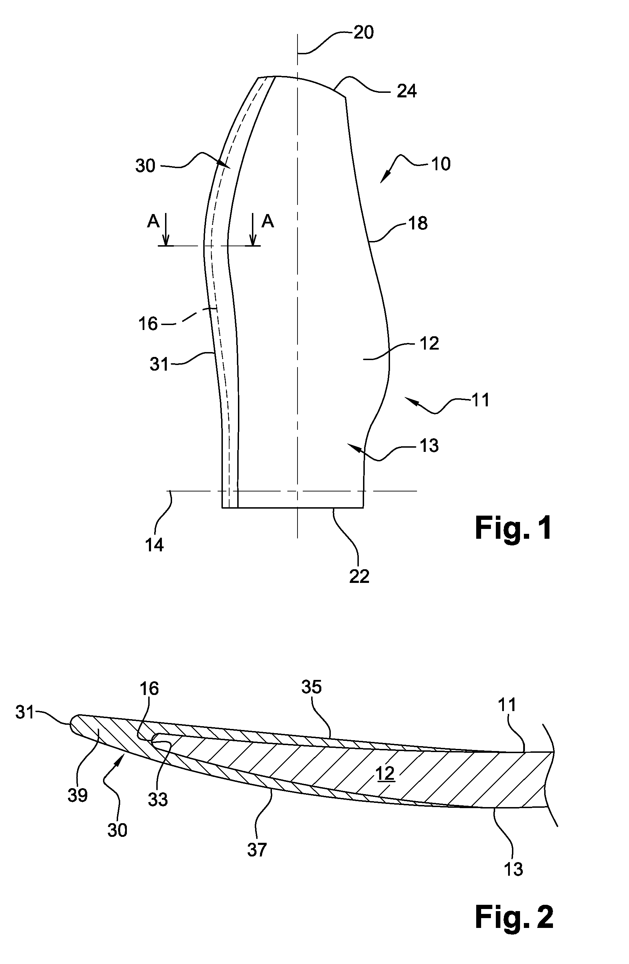

La figure 1 est une vue latérale d'une aube comportant un renfort structurel métallique de bord d'attaque obtenu au moyen du procédé de réalisation selon l'invention.

L'aube 10 illustrée est par exemple une aube mobile de soufflante d'une turbomachine (non représentée).

L'aube 10 comporte une surface aérodynamique 12 s'étendant selon une première direction axiale 14 entre un bord d'attaque 16 et un bord de fuite 18 et selon une deuxième direction radiale 20 sensiblement perpendiculaire à la première direction 14 entre un pied 22 et un sommet 24.

La surface aérodynamique 12 forme la face extrados 13 et intrados 11 de l'aube 10, seulement la face extrados 13 de l'aube 10 est représentée sur la figure 1. L'intrados 11 et l'extrados 13 forment les faces latérales de l'aube 10 qui relient le bord d'attaque 16 au bord de fuite 18 de l'aube 10.

Dans ce mode de réalisation, l'aube 10 est une aube composite obtenue typiquement par drapage d'un matériau composite tissé. A titre d'exemple, le matériau composite utilisé peut être composé par un assemblage de fibres de carbone tissées et d'une matrice résineuse, l'ensemble étant formé par moulage au moyen d'un procédé d'injection de résine sous vide de type RTM (pour « Resin Transfer Molding »).

L'aube 10 comporte un renfort structurel métallique 30 collé au niveau de son bord d'attaque 16 et qui s'étend à la fois selon la première direction 14 au-delà du bord d'attaque 16 de la surface aérodynamique 12 de l'aube 10 et selon la deuxième direction 20 entre le pied 22 et le sommet 24 de l'aube.

Comme représenté à la figure 2, le renfort structurel 30 épouse la forme du bord d'attaque 16 de la surface aérodynamique 12 de l'aube 10 qu'il prolonge pour former un bord d'attaque 31, dit bord d'attaque du renfort.

De façon classique, le renfort structurel 30 est une pièce monobloc comportant une section sensiblement en forme de V présentant une base 39 formant le bord d'attaque 31 et prolongée par deux flancs latéraux 35 et 37 épousant respectivement l'intrados 11 et extrados 13 de la surface aérodynamique 12 de l'aube. Les flancs 35, 37 présentent un profil effilé ou amincie en direction du bord de fuite de l'aube.

La base 39 comporte un profil interne 33 arrondi apte à épouser la forme arrondie du bord d'attaque 16 de l'aube 10.

Le renfort structurel 30 est métallique et préférentiellement à base titane. Ce matériau présente en effet une grande capacité d'absorption de l'énergie due aux chocs. Le renfort est collé sur l'aube 10 au moyen de colle connue de l'homme du métier, comme par exemple une colle cyanoacrylique ou encore époxy.

Ce type de renfort structurel métallique 30 utilisé pour le renfort d'aube composite de turbomachine est plus particulièrement décrit notamment dans la demande de brevet EP1908919.

Le procédé selon l'invention permet de réaliser notamment un renfort structurel tel qu'illustré à la figure 2, la figure 2 illustrant le renfort 30 dans son état final monté sur une aube 10 mobile de soufflante de turbomachine.

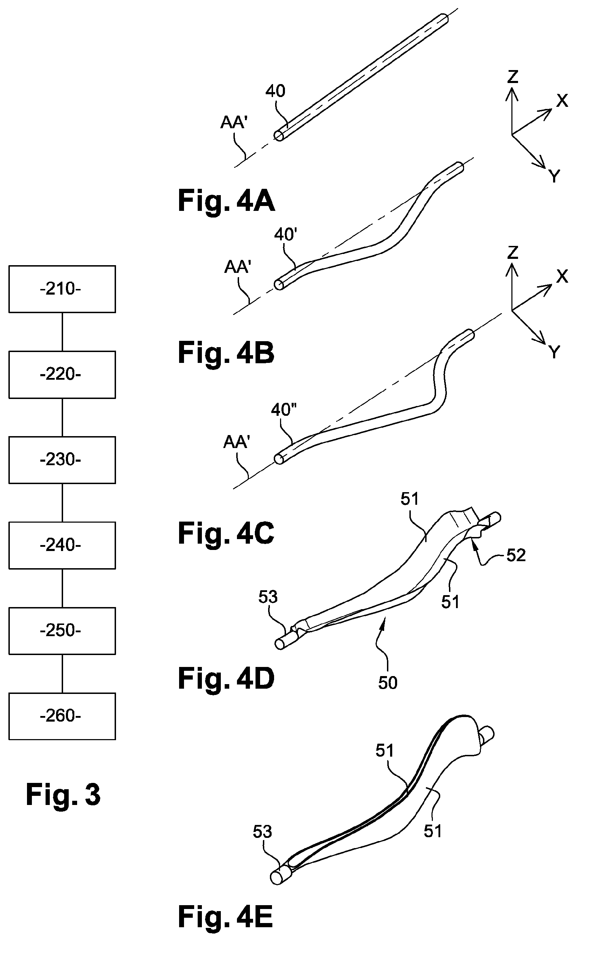

La figure 3 représente un schéma synoptique illustrant les principales étapes d'un procédé de réalisation 200 selon l'invention pour la réalisation d'un renfort structurel métallique 30 de bord d'attaque d'aube 10 tel qu'illustré aux figures 1 et 2.

La première étape 210 du procédé de réalisation 200 est une étape de forge d'un barreau métallique 40 rectiligne (illustré à la figure 4A) permettant d'obtenir une cambrure dudit barreau 40 selon une direction perpendiculaire à l'axe longitudinal AA' du barreau 40, tel qu'illustré en figure 4B.

Le barreau métallique 40 est un barreau en titane de section circulaire de l'ordre de quelques millimètres de diamètre ; le diamètre de la section varie en fonction des besoins de l'utilisateur et de l'épaisseur matière nécessaire pour la réalisation de la pièce finale.

Lors de cette première étape de forge, le barreau métallique 40 est déformé de façon à présenter une première cambrure selon une première direction Z au moyen d'une presse, par exemple une presse isotherme portée à une température comprise entre 700 °C et 940 °C pour avoir de bonnes propriétés de déformation du Titane sous faible vitesse de déformation.

La deuxième étape 220 du procédé de réalisation 200 est une étape de forge du barreau métallique 40' cambré obtenu lors de l'étape précédente (illustré à la figure 4B) de façon à obtenir une deuxième cambrure dudit barreau 40 selon une direction qui est perpendiculaire à l'axe longitudinal AA' et à l'axe Z. Ainsi, selon le référentiel illustré à la figure 4B, la deuxième cambrure du barreau 40 est réalisée selon la direction Y de façon à obtenir un barreau métallique 40" avec une double cambrure (i.e. selon deux directions) tel qu'illustré à la figure 4C.

Cette étape peut également être réalisée par exemple au moyen d'une presse isotherme portée à une température comprise entre 700°C et 940°C pour avoir de bonnes propriétés de déformation du Titane sous faible vitesse de déformation. A titre d'exemple, la première et la deuxième étape peuvent être réalisées au moyen d'une presse à vis et d'un outillage poinçon/matrice.

Ces deux premières étapes 210, 220 permettent de vriller le barreau métallique 40 sensiblement rectiligne selon la fibre neutre du renfort métallique 30 final tel qu'illustré aux figures 1 et 2.

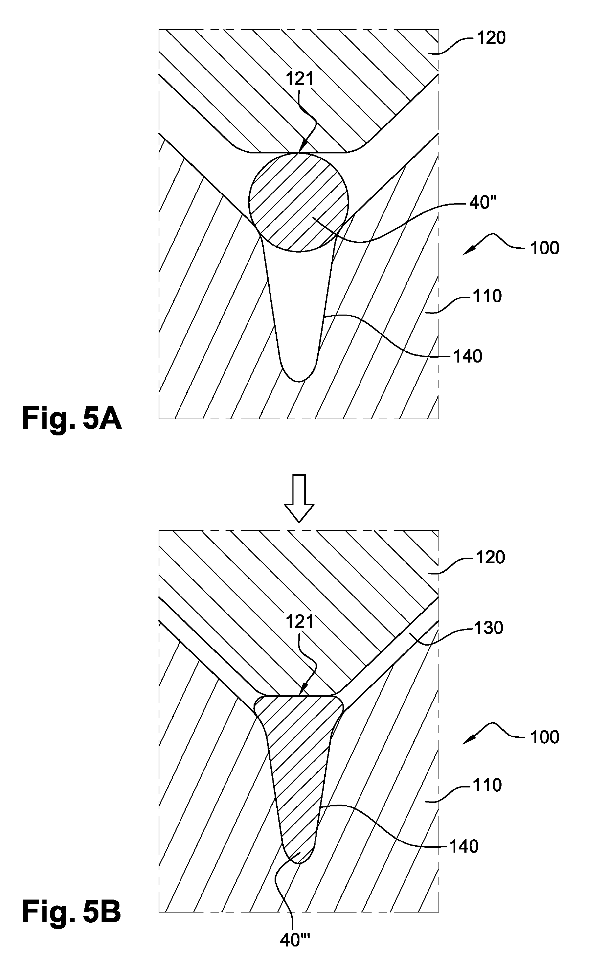

La troisième étape 230 du procédé de réalisation 200 est une étape de forge du barreau métallique 40" doublement cambré par une opération de bourrage sous presse du barreau métallique 40" dans un outillage 100 tel qu'illustré sur les figures 5A et 5B.

Cette étape 230 est réalisée par la mise en place préalable du barreau métallique 40" vrillé dans l'outillage 100, tel qu'illustré à la figure 5A. Le barreau métallique 40" est ensuite déformé par bourrage sous l'action d'un poinçon 120 mobile de façon à remplir l'empreinte 140 d'une matrice 110, tel qu'illustré à la figure 5B. On obtient alors une pièce 40'" dont la forme correspond à la forme de l'empreinte 140 de la matrice 110.Le poinçon 120 présente une surface de contact 121 sensiblement plane apte à venir en contact avec le barreau métallique 40" inséré dans l'outillage et apte à le déformer de façon à l'insérer dans l'empreinte 140 sous la pression exercée par le poinçon 120.

L'empreinte 140 de l'outillage 100 présente la double cambrure finale du bord d'attaque 31 du renfort métallique d'aube de turbomachine et correspond à la forme finale de la base 39 du renfort métallique 30.

Cette troisième étape 230 est réalisée sous presse, typiquement au moyen d'une presse à vis, à une température de l'ordre de 940°C. A cette température, le titane possède un taux d'allongement supérieur à 35% ce qui permet de réaliser des déformations importantes sans dégradation des propriétés du titane.

La quatrième étape 240 du procédé de réalisation 200 est une étape de forge dudit barreau métallique 40"' obtenu après bourrage par une opération de déformation du barreau métallique au travers de filières, telle qu'une opération de forge par filage.

Le filage est une méthode de mise en forme des métaux par forgeage. Elle consiste à pousser un matériau ductile (rendu ductile par chauffage) à travers un trou, ou une filière. Le filage consiste à placer du métal solide chauffé à la température dite température de filage dans un outillage et de la faire ressortir par un orifice, généralement une filière en exerçant une poussée. A partir d'un certain effort, il y a un écoulement plastique à travers la filière.

Il existe deux variantes de filage : le filage direct, le filage inverse.

Le filage direct consiste à déplacer la matière chauffée préalablement placée dans l'ouillage au moyen d'un poinçon vers la filière. Le filage inverse consiste à déplacer en même temps l'outillage et le métal vers la filière ce qui permet de s'affranchir des frottements entre la matière et l'outillage.

Avantageusement, l'étape 240 est une étape de filage inverse permettant de faire remonter de la matière à travers des filières. Toutefois, l'étape 240 peut également être une étape de filage direct.

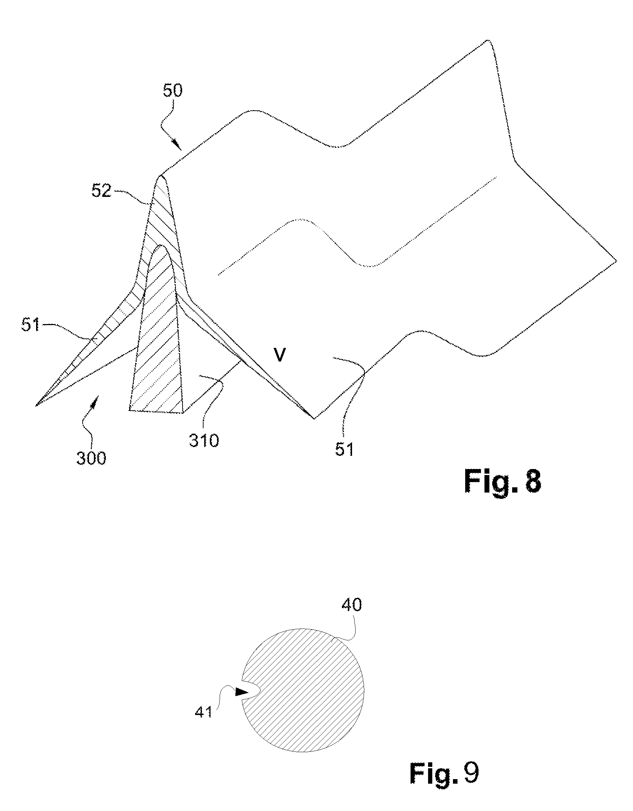

Dans le cas du filage direct, et préalablement à cette étape 240, il est possible de réaliser une préforme 41 sur le barreau métallique 40 par usinage telle qu'illustrée sur la figure 9, de manière à faciliter l'étape de filage, notamment par une amélioration du guidage de l'outillage.

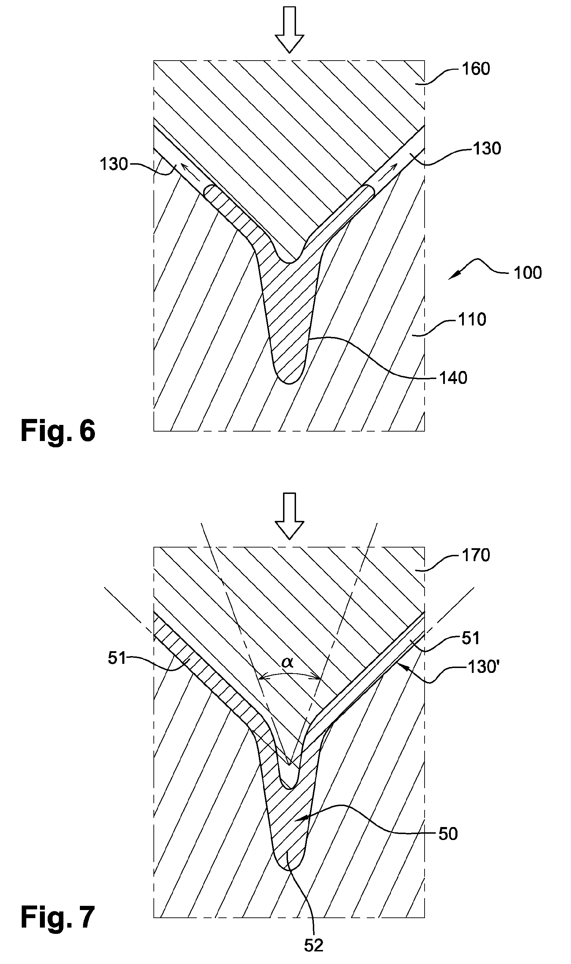

De façon préférentielle, cette étape de réalisation d'une préforme 41 sur le barreau métallique 40 est réalisée préalablement aux étapes de cambrures 210 et 220 du procédé selon l'invention. Cette étape de forge par filage inverse, est réalisée dans le même outillage 100 que celui utilisé lors de l'étape précédente. Toutefois, le poinçon 120 présentant une surface de contact plane 121 est remplacé par un poinçon 160 dont la surface de contact présente une forme plus effilée, sensiblement en forme de V, telle qu'illustrée en figure 6.

La forme spécifique du poinçon 160 permet d'exercer une poussée sur la matière du barreau métallique 40"', de la déformer et de la pousser à l'intérieur des filières 130 situées entre le poinçon 160 et la matrice 110.

Cette étape 240 de filage inverse peut être réalisée en deux fois avec deux poinçons successifs différents. Un premier poinçon 160 tel que décrit précédemment et illustré à la figure 6 et un second poinçon 170 illustré à la figure 7 qui comporte une surface de contact plus pointue et plus effilée que le poinçon précédent 160 de façon à pousser d'avantage de matière dans les filières 130' entre le poinçon 170 et la matrice 110.

Typiquement, la forme du poinçon 170 correspond à la forme finale du profil interne 33 de la base 39 du renfort métallique 30 (illustré à la figure 2), c'est-à-dire à la forme arrondie du bord d'attaque 16 de l'aube 10.

Cette étape 240 de filage inverse peut être réalisée en une ou plusieurs opérations avec différents poinçons. Le choix du nombre d'opérations dépendra de la quantité de matière à filer ainsi que de la complexité de la pièce à réaliser.

Avantageusement, les différentes opérations de l'étape 240 sont réalisées successivement sans manipulation excessive de l'opérateur et sans variation importante de la température (i.e. sans refroidissement de la pièce et de l'outillage). De façon similaire à l'étape précédente, l'étape 240 de filage inverse est réalisée à une température de l'ordre de 940°C (plus ou moins 10°C) au moyen d'une presse de type presse hydraulique, presse à vis, etc.

L'étape de filage inverse permet ainsi d'obtenir au moyen d'un nombre limité d'opérations des déformations importantes de la matière de façon à former une pièce intermédiaire 50 illustrée à la figure 4D.

La pièce intermédiaire 50 est une pièce sensiblement en forme de V ou en forme de Y (forme en Y représentée sur les figures 4E et 7) comportant deux ailettes latérales 51 situées de part et d'autre d'une partie pleine 52 correspondant sensiblement à la forme finale de la base 39 du renfort métallique 30, notamment au bord d'attaque 31.

Aux extrémités de la pièce intermédiaire 50, des tourillons 53, résultant du barreau métallique 20 initial, permettent de manutentionner la pièce lors des différentes étapes et opérations si besoin et permettent également de réaliser un référentiel dans les différents outillages utilisés.

La pièce intermédiaire 50 est réalisée dans l'outillage 100 de sorte que les deux ailettes 51 latérales ont un angle d'ouverture α sensiblement compris entre 60° et 90°, ceci pour remplir les exigences de spécification métallurgique.

Les épaisseurs des ailettes 51 latérales correspondent sensiblement aux épaisseurs de flancs intrados et extrados du renfort métallique 30, les ailettes 51 ont donc un profil s'amincissant progressivement en direction opposée au bord d'attaque de la pièce intermédiaire 50. A cet effet, les filières 130 de l'outillage 100 sont dimensionnées de façon à obtenir le profil et les épaisseurs des ailettes requis pour la réalisation du renfort métallique 30.

La cinquième étape 250 du procédé de réalisation 200 est une étape de forge modifiant l'angle d'ouverture α des ailettes latérales 51. Lors de cette étape 250, les deux ailettes latérales 51 de la pièce intermédiaire 50 sont rapprochées, c'est-à-dire que l'angle α est réduit, de façon à obtenir la forme finale du renfort métallique 30 de bord d'attaque d'aube de turbomachine.

Cette étape 250 est réalisée dans un outillage de forme 300 (illustré en figure 8) présentant la forme finale et définitive du renfort métallique 30 et au moyen d'une presse classique, du type presse hydraulique, presse à vis, .... A cet effet, l'outillage 300 comporte une empreinte 310 correspondant sensiblement au profil de l'aube de turbomachine à laquelle le renfort métallique 30 est destiné, ainsi qu'une contre-empreinte (non représentée) présentant la forme extérieure du renfort métallique 30 et notamment le profil des flancs latéraux 35 et 37 épousant respectivement l'intrados 11 et extrados 13 de la surface aérodynamique 12 de l'aube 10.

Selon le mode de réalisation représenté à titre d'exemple à la figure 8, la pièce intermédiaire 50 est positionnée dans l'outillage 300 de façon à reposer sur l'empreinte 310.

Les deux ailettes 51 sont ensuite rabattues en direction de l'empreinte 210 par la contre-empreinte afin de réduire l'angle α et de former le profil final du renfort métallique 30.

Avantageusement, la pièce intermédiaire 50 est vrillée simultanément avec la déformation des ailettes 51 au moyen de l'outillage 300 de façon à finaliser le vrillage de la pièce.

Cette étape 250 permet donc, de façon simultanée, de :
- finaliser la forme du rayon interne 33 du renfort métallique 30 ;
- former les flancs latéraux 35 et 37 du renfort métallique 30 ;
- finaliser le vrillage du renfort métallique 30.

Toutefois, selon un autre mode de réalisation, ces différentes opérations peuvent être réalisées de façon indépendante si besoin.

De façon similaire aux étapes précédentes 230, 240, l'étape 250 est réalisée à une température de l'ordre de 940°C.

Le renfort métallique 30 ainsi obtenu lors de l'étape 250 est démoulé préférentiellement à chaud afin de faciliter le démoulage de la pièce. Toutefois, le démoulage peut également être réalisé à froid.

De façon à faciliter le démoulage du renfort métallique 30, notamment à froid, l'empreinte 310 peut être constituée par une pluralité de sections mobiles ou amovibles et aptes à se démonter individuellement.

Afin de faciliter le démoulage, il est également possible de préparer initialement l'outillage 300 en déposant une couche de protection sur l'empreinte 310 de façon à éviter que le renfort 30 ne colle sur l'outillage 300. A titre d'exemple, cette couche de protection peut être une couche d'oxyde d'aluminium

Enfin, la sixième étape 260 du procédé de réalisation 200 est une étape optionnelle de finition et de reprise du renfort 30 par usinage. Cette étape de finition 260 consiste notamment :
- à la reprise des flancs 35, 37 (cette étape consiste notamment au détourage des flancs 35, 37 et à l'amincissement des flancs intrados et extrados 35, 37) ;
- au polissage du renfort 30 afin d'obtenir l'état de surface requis.

La figure 4E illustre le renfort 30 dans son état final obtenu par le procédé de réalisation selon l'invention.

En association avec ces principales étapes de réalisation, le procédé selon l'invention peut également comporter des étapes de contrôle non destructif du renfort 30 permettant de s'assurer de la conformité géométrique et métallurgique de l'ensemble obtenu. A titre d'exemple les contrôles non destructifs peuvent être réalisés par un procédé de contrôle par rayons optiques (par lumière blanche) ou ultrasons sans contact.

Le procédé selon l'invention a été décrit principalement pour un renfort structurel métallique à base titane ; toutefois, le procédé selon l'invention est également applicable avec des matériaux à base nickel ou encore à base acier.

Le procédé selon l'invention a été principalement décrit pour la réalisation d'un renfort métallique à partir d'un barreau métallique à base titane ; toutefois, l'invention est également applicable avec l'utilisation d'un barreau métallique renforcé préalablement par exemple par du SiC-Ti.

Un exemple de réalisation d'un barreau métallique renforcée en titane serait par exemple un barreau métallique comportant un coeur renforcé par du SiC-Ti et une enveloppe en titane. Ce barreau métallique renforcé peut être obtenu par exemple par un procédé de cofilage consistant à faire passer à l'intérieur d'une filière (i.e. un cône de réduction) une barre en Sic-Ti, entouré par un manchon en titane. Les forces de compression et l'échauffement générés par les frictions entre les deux matériaux à leur interface, assurent une liaison intime entre les deux matériaux.

Le coeur en SiC-Ti peut avantageusement être positionné dans la barre métallique de manière à suivre ou non la déformation du barreau métallique lors du procédé selon l'invention.

Le procédé selon l'invention peut également comporter au préalable une étape d'usinage du barreau métallique renforcé obtenu, avant la réalisation des étapes de forge, par exemple par usinage mécanique ou chimique.

Bien évidemment, il est également envisagé de réaliser un barreau métallique renforcé comportant un coeur non renforcé et une enveloppe renforcée.

Avantageusement, les différentes opérations de cambrage, de bourrage, de filage et de vrillage sont réalisées sur une pièce formant renfort métallique portée à une température de l'ordre de 940 °C, à plus ou moins dix pour cent, l'environnement et l'outillage pouvant adopter des températures différentes qui ont été mentionnées dans l'exemple décrit précédemment.

L'invention a été particulièrement décrite pour la réalisation d'un renfort métallique d'une aube composite de turbomachine ; toutefois, l'invention est également applicable pour la réalisation d'un renfort métallique d'une aube métallique de turbomachine.

L'invention a été particulièrement décrite pour la réalisation d'un renfort métallique d'un bord d'attaque d'aube de turbomachine ; toutefois, l'invention est également applicable pour la réalisation d'un renfort métallique d'un bord de fuite d'une aube de turbomachine.

Les autres avantages de l'invention sont notamment les suivants :
- réduction des coûts de réalisation ;
- réduction du temps de réalisation ;
- simplification de la gamme de fabrication ;
- réduction des coûts des outillages ;
- réduction des coûts matière.

## Revendications

1. Procédé de réalisation (200) d'un renfort métallique (30) de bord d'attaque ou de bord de fuite d'aube de turbomachine (10) comportant :
- une étape (240) de déformation par forgeage d'un barreau métallique (40), le métal étant poussé dans une direction essentiellement perpendiculaire à l'axe longitudinal du barreau au travers de deux filières de façon à obtenir une pièce intermédiaire (50) comportant deux ailettes (51) de part et d'autre d'une partie pleine (53) apte à former la base (39) dudit renfort métallique (30), lesdites deux ailettes (51) présentant un angle d'ouverture α ;
- une étape (250) de déformation desdites ailettes (51) de ladite pièce intermédiaire (50), modifiant ledit angle d'ouverture α, de façon à obtenir la forme finale du renfort métallique (30) de bord d'attaque ou de bord de fuite d'aube de turbomachine.

2. Procédé de réalisation (200) selon la revendication 1 **caractérisé en ce que** préalablement à ladite étape (240) de déformation par forgeage dudit barreau métallique (40), le procédé de réalisation (200) comporte une étape (210, 220) de cambrage dudit barreau métallique (40) selon une direction perpendiculaire à l'axe longitudinal dudit barreau (40).

3. Procédé de réalisation (200) selon l'une des revendications 1 à 2 **caractérisé en ce que** préalablement à ladite étape (240) de déformation par forgeage dudit barreau métallique (40), le procédé de réalisation (200) comporte une étape (230) de bourrage dudit barreau métallique (40) dans un outillage (100) présentant une empreinte (140) correspondant la forme finale de la base (39) pleine dudit renfort métallique (30).

4. Procédé de réalisation (200) selon la revendication 3 **caractérisé en ce que** ladite étape (230) de bourrage dudit barreau métallique (40) et ladite étape (240) de déformation par forgeage dudit barreau métallique (40) sont réalisées dans le même outillage (100) au moyen d'une pluralité de poinçons (120, 160, 170).

5. Procédé de réalisation (200) selon l'une des revendications 3 à 4 **caractérisé en ce que** ladite étape (230) de bourrage dudit barreau métallique (40) est réalisée à chaud.

6. Procédé de réalisation (200) selon l'une des revendications 3 à 5 **caractérisé en ce que** ladite étape (230) de bourrage dudit barreau métallique (40), ladite étape (240) de déformation par forgeage dudit barreau métallique (40) sont réalisées de façon continue sans refroidissement de l'outillage (100).

7. Procédé de réalisation (200) selon l'une des revendications 1 à 6 et selon la revendication 2 **caractérisé en ce que** ladite étape (210, 220) de cambrage dudit barreau métallique (40), ladite étape (240) de déformation par forgeage dudit barreau métallique (40) et ladite étape (250) de déformation de ladite pièce intermédiaire (50) sont réalisées à chaud.

8. Procédé de réalisation (200) selon l'une des revendications 1 à 7 et selon la revendication 2 **caractérisé en ce que** ladite étape (210, 220) de cambrage dudit barreau métallique (40) comporte :
- une première sous-étape de cambrage dudit barreau métallique (40) selon une première direction perpendiculaire à l'axe longitudinal dudit barreau (40) ;
- une deuxième sous-étape (220) de cambrage dudit barreau métallique (40) selon une deuxième direction perpendiculaire à ladite première direction et perpendiculaire à l'axe longitudinal dudit barreau (40).

9. Procédé de réalisation (200) selon l'une des revendications 1 à 8 **caractérisé en ce que** ledit procédé comporte une étape de réalisation d'une préforme (41) sur ledit barreau métallique (40) de manière à faciliter le positionnement de l'outillage sur ledit barreau (40) lors de ladite étape de déformation par forgeage (240).

10. Procédé de réalisation (200) selon l'une des revendications 1 à 8 **caractérisé en ce que** ladite étape de déformation par forgeage est une étape de filage inverse.

11. Procédé de réalisation (200) selon l'une des revendications 1 à 10 **caractérisé en ce que** ladite étape de déformation par forgeage est réalisée au moyen d'au moins un poinçon en deux opérations successives.

12. Procédé de réalisation (200) selon l'une des revendications 1 à 11 **caractérisé en ce que** ladite étape (250) de déformation desdites ailettes (51) de ladite pièce intermédiaire réalise de façon simultanée le vrillage définitif de ladite pièce intermédiaire (50).

13. Procédé de réalisation (200) selon l'une des revendications 1 à 12 **caractérisé en ce que** ladite étape (250) de déformation desdites ailettes (51) de ladite pièce intermédiaire réalise de façon simultanée :
- la finalisation de la forme du rayon interne (33) du renfort métallique (30) ;
- la formation des flancs latéraux (35) et (37) du renfort métallique (30) ;
- la finalisation du vrillage dudit renfort métallique (30).

## Patentansprüche

1. Realisierungsverfahren (200) einer Metallverstärkung (30) einer Vorderkante oder Hinterkante einer Turbomaschinenschaufel (10), umfassend:
- einen Verformungsschritt (240) per Schmieden einer Metallstange (40), wobei das Metall in einer zur Längsachse der Stange im Wesentlichen lotrechten Richtung mittels zwei Zieheisen derart geschoben wird, dass ein Zwischenstück (50) erhalten wird, das auf jeder Seite einen massiven Teil (53) umfasst, der geeignet ist, die Basis (39) der genannten Metallverstärkung (30) zu bilden, wobei die genannten zwei Flügel (51) einen Öffnungswinkel α aufweisen;
- einen Verformungsschritt (250) der genannten Flügel (51) des genannten Zwischenstücks (50), das den genannten Öffnungswinkel α derart abändert, dass die endgültige Form der Metallverstärkung (30) der Vorderkante oder der Hinterkante einer Turbomaschinenschaufel erhalten wird.

2. Realisierungsverfahren (200) gemäß Anspruch 1, **dadurch gekennzeichnet, dass** vor dem genannten Verformungsschritt (240) per Schmieden der genannten Metallstange (40) das Realisierungsverfahren (200) einen Krümmungsschritt (210, 220) der genannten Metallstange (40) gemäß einer zur Längsachse der genannten Stange (40) lotrechten Richtung umfasst.

3. Realisierungsverfahren (200) gemäß einem der Ansprüche 1 bis 2, **dadurch gekennzeichnet, dass** vor dem genannten Verformungsschritt (240) per Schmieden der genannten Metallstange (40) das Realisierungsverfahren (200) einen Verdämmerungsschritt (230) der genannten Metallstange (40) in einem Werkzeug (100) umfasst, das eine Vertiefung (140) aufweist, die der endgültigen Form der massiven Basis (39) der genannten Metallverstärkung (30) entspricht.

4. Realisierungsverfahren (200) gemäß Anspruch 3, **dadurch gekennzeichnet, dass** der genannte Verdämmerungsschritt (230) der genannten Metallstange (40) und der genannte Verformungsschritt (240) per Schmieden der genannten Metallstange (40) in demselben Werkzeug (100) mittels einer Vielzahl von Löchern (120, 160, 170) realisiert sind.

5. Realisierungsverfahren (200) gemäß einem der Ansprüche 3 bis 4, **dadurch gekennzeichnet, dass** der genannte Verdämmerungsschritt (230) der genannten Metallstange (40) heiß realisiert wird.

6. Realisierungsverfahren (200) gemäß einem der Ansprüche 3 bis 5, **dadurch gekennzeichnet, dass** der genannte Verdämmerungsschritt (230) der genannten Metallstange (40), der genannten Verformungsschritt per Schmieden der genannten Metallstange (40) kontinuierlich, ohne Abkühlen des Werkzeugs (100) realisiert werden.

7. Realisierungsverfahren (200) gemäß einem der Ansprüche 1 bis 6 und gemäß Anspruch 2, **dadurch gekennzeichnet, dass** der genannte Krümmungsschritt (210, 220) der genannten Metallstange (40), der genannte Verformungsschritt per Schmieden der genannten Metallstange (40) und der genannte Verformungsschritt (250) des genannten Zwischenstücks (50) heiß realisiert werden.

8. Realisierungsverfahren (200) gemäß irgendeinem der Ansprüche 1 bis 7 und gemäß Anspruch 2, **dadurch gekennzeichnet, dass** der genannte Krümmungsschritt (210, 220) der genannten Metallstange (40) umfasst:
- einen ersten Krümmungsunterschritt der genannten Metallstange (40) gemäß einer ersten, zur Längsachse der genannten Stange (40) lotrechten Richtung;
- einen zweiten Krümmungsunterschritt (220) der genannten Metallstange (40) gemäß einer zweiten, zu der genannten ersten Richtung lotrechten und zur Längsachse der genannten Stange (40) lotrechten Richtung.

9. Realisierungsverfahren (200) gemäß einem der Ansprüche 1 bis 8, **dadurch gekennzeichnet, dass** das genannte Verfahren einen Realisierungsschritt einer Vorform (41) auf der genannten Metallstange (40) derart umfasst, dass die Positionierung des Werkzeugs auf der genannten Stange (40) bei dem genannten Verformungsschritt per Schmieden (240) umfasst.

10. Realisierungsverfahren (200) gemäß einem der Ansprüche 1 bis 8, **dadurch gekennzeichnet, dass** der genannte Verformungsschritt per Schmieden ein Rückwärts-Fließpressschritt ist.

11. Realisierungsverfahren (200) gemäß einem der Ansprüche 1 bis 10, **dadurch gekennzeichnet, dass** der genannte Verformungsschritt per Schmieden mittels wenigstens eines Lochers in zwei aufeinanderfolgenden Operationen realisiert wird.

12. Realisierungsverfahren (200) gemäß einem der Ansprüche 1 bis 11, **dadurch gekennzeichnet, dass** der genannte Verformungsschritt (250) der genannten Flügel (51) des genannten Zwischenstücks gleichzeitig die endgültige Verdrillung des genannten Zwischenstücks (50) realisiert.

13. Realisierungsverfahren (200) gemäß einem der Ansprüche 1 bis 12, **dadurch gekennzeichnet, dass** der genannte Verformungsschritt (250) der genannten Flügel (51) des genannten Zwischenstücks gleichzeitig realisiert:
- den Abschluss der Form des internen Radius (33) der Metallverstärkung (30);
- die Bildung der lateralen Flanken (35) und (37) der Metallverstärkung (30);
- den Abschluss der Verdrillung der genannten Metallverstärkung (30).

## Claims

1. Method of manufacture (200) of a metal reinforcement (30) of a leading edge or trailing edge of a turbomachine blade (10) including:
• a step (240) of deformation by forging of a metal bar (40) where the metal is thrust in a direction essentially perpendicular to the longitudinal axis of the bar through two die heads in order to obtain an intermediate part (50) with two vanes (51) either side of a solid portion (53) able to form the base (39) of the said metal reinforcement (30), where both vanes (51) have an aperture angle α;
• a step (250) of deformation of the said vanes (51) of the said intermediate part (50), modifying the said aperture angle α, so as to obtain the final shape of the metal reinforcement (30) of the leading edge or trailing edge of the turbomachine blade.

2. Manufacturing method (200) according to claim 1 **characterised in that**, prior to the said step (240) of deformation by forging of the said metal bar (40), the manufacturing method (200) includes a step (210, 220) of cambering of the said metal bar (40) in a direction perpendicular to the longitudinal axis of the said bar (40).

3. Manufacturing method (200) according to one of claims 1 to 2 **characterised in that**, prior to the said step (240) of deformation by forging of the said metal bar (40), the manufacturing method (200) includes a step (230) of ramming of the said metal bar (40) in tooling (100) having a mould (140) corresponding to the final form of the solid base (39) of the said metal reinforcement (30).

4. Manufacturing method (200) according to claim 3 **characterised in that** the said step (230) of ramming of the said metal bar (40) and the said step (240) of deformation by forging of the said metal bar (40) are accomplished in the same tooling (100) by means of a plurality of punches (120, 160, 170).

5. Manufacturing method (200) according to one of claims 3 to 4 **characterised in that** the said step (230) of ramming of the said metal bar (40) is accomplished at high temperature.

6. Manufacturing method (200) according to one of claims 3 to 5 **characterised in that** the said step (230) of ramming of the said metal bar (40) and the said step (240) of deformation by forging of the said metal bar (40) are accomplished continuously without letting the tooling (100) cool.

7. Manufacturing method (200) according to one of claims 1 to 6 and according to claim 2 **characterised in that** the said step (210, 220) of cambering of the said metal bar (40), the said step (240) of deformation by forging of the said metal bar (40) and the said step (250) of deformation of the said intermediate part (50) are accomplished at high temperature.

8. Manufacturing method (200) according to one of claims 1 to 7 and according to claim 2 **characterised in that** the said step (210, 220) of cambering of the said metal bar (40) includes:
• a first sub-step of cambering of the said metal bar (40) in a direction perpendicular to the longitudinal axis of the said bar (40);
• a second sub-step (220) of cambering of the said metal bar (40) in a second direction perpendicular to the said first direction and perpendicular to the longitudinal axis of the said bar (40).

9. Manufacturing method (200) according to one of claims 1 to 8 **characterised in that** the said method includes a step of manufacture of a preform (41) on the said metal bar (40) so as to facilitate the positioning of the tooling on the said bar (40) in the said step of deformation by forging (240).

10. Manufacturing method (200) according to one of claims 1 to 8 **characterised in that** the said step of deformation by forging is a step of indirect extrusion.

11. Manufacturing method (200) according to one of claims 1 to 10 **characterised in that** the said step of deformation by forging is accomplished by means of at least one punch in two successive operations.

12. Manufacturing method (200) according to one of claims 1 to 11 **characterised in that** the said step (250) of deformation of the said vanes (51) of the said intermediate part accomplishes, simultaneously, the definitive twisting of the said intermediate part (50).

13. Manufacturing method (200) according to one of claims 1 to 12 **characterised in that** the said step (250) of deformation of the said vanes (51) of the said intermediate part accomplishes, simultaneously:
• finalisation of the shape of the internal radius (33) of the metal reinforcement (30);
• formation of the side flanks (35) and (37) of the metal reinforcement (30);
• finalisation of the twisting of the said metal reinforcement (30).
